# EUROPÄISCHE PATENTSCHRIFT

(11) **EP 4 508 416 B1**
(45) Veröffentlichungstag und Bekanntmachung des Hinweises auf die Patenterteilung: **10.12.2025**
(21) Anmeldenummer: 23715881.1
(22) Anmeldetag: 04.04.2023
(51) Int. Cl.: G01N 21/64

(54) **VERFAHREN ZUM KARTIEREN DER OBERFLÄCHE EINES MAKROMOLEKÜLS**
METHOD OF MAPPING THE SURFACE OF A MACROMOLECULE
PROCÉDÉ POUR DRESSER UNE CARTE D'UNE SURFACE D'UNE MACROMOLÉCULE

(30) Priorität: 13.04.2022 DE 102022109027
(43) Veröffentlichungstag der Anmeldung: 19.02.2025
(73) Patentinhaber: Max-Planck-Gesellschaft zur Förderung der Wissenschaften E. V., 10117 Berlin (DE)
(72) Erfinder: HELL, Stefan W., 37085 Göttingen (DE)
(74) Vertreter: REHBERG HÜPPE + PARTNER
(86) Internationale Anmeldenummer: PCT/EP2023/058765
(87) Internationale Veröffentlichungsnummer: WO 2023/198512

(56) Entgegenhaltungen:
- GWOSCH KLAUS C ET AL: "MINFLUX nanoscopy delivers 3D multicolor nanometer resolution in cells", NATURE METHODS, NATURE PUBLISHING GROUP US, NEW YORK, vol. 17, no. 2, 13 January 2020 (2020-01-13), pages 217 - 224, XP037006746, ISSN: 1548-7091, [retrieved on 20200113], DOI: 10.1038/S41592-019-0688-0
- WEBER MICHAEL ET AL: "MINSTED fluorescence localization and nanoscopy", NATURE PHOTONICS, NATURE PUBLISHING GROUP UK, LONDON, vol. 15, no. 5, 15 March 2021 (2021-03-15), pages 361 - 366, XP037523327, ISSN: 1749-4885, [retrieved on 20210315], DOI: 10.1038/S41566-021-00774-2

## Beschreibung

### TECHNISCHES GEBIET DER ERFINDUNG

Die Erfindung bezieht sich auf ein Verfahren zum Kartieren der Oberfläche eines Makromoleküls.

Unter einem Makromolekül werden hier insbesondere, aber nicht ausschließlich Proteine und Proteinkomplexe verstanden. Die interessierende Oberfläche ist ein wesentlicher Teil der sogenannten Tertiärstruktur von Proteinen und der sogenannten Quartärstruktur von Komplexen. Beim Kartieren der Oberfläche geht es primär um das Bestimmen ihres dreidimensionalen Verlaufs. Hinzu kommt die Bestimmung der Lage von Bereichen mit speziellen chemischen und/oder physikalischen Eigenschaften. Insgesamt kann es das Ziel sein, an der Oberfläche des Makromoleküls liegende Bindungsplätze für andere Moleküle oder Makromoleküle zu erkennen und charakterisieren.

### STAND DER TECHNIK

Ein bekanntes Verfahren zum Bestimmen der Struktur von Makromolekülen ist die Röntgenstrukturanalyse. Dieses Verfahren erfordert das Züchten von Kristallen der Makromoleküle. Es muss also nicht nur eine Vielzahl der Makromoleküle vorhanden sein, sondern diese Makromoleküle müssen sich dazu auch in einem Kristallgitter geordnet haben. Viele Makromoleküle lassen sich leider nicht kristallisieren, oder die Züchtung von Kristallen ist sehr zeit- und kostenaufwändig. Selbst wenn die Kristallisation gelingt, besteht die Gefahr, dass die Struktur der Makromoleküle durch die Kristallisation verändert wird. Zudem werden durch Röntgenstrukturanalyse zwar Informationen über die Tertiärstruktur von Proteinen oder die Quartärstruktur von Komplexen erhalten, eine vollständige Kartierung deren Oberflächen ist jedoch in der Regel nicht möglich.

Weiterhin ist es bekannt, Strukturen von Makromolekülen mit Hilfe von Kernspinresonanzspektroskopie (NMR-Spektroskopie) zu bestimmen. Hierzu werden keine Kristalle der Makromoleküle benötigt. Es werden aber auch nur Informationen über die Umgebungen der Kerne einzelner chemischer Elemente in den Makromolekülen erhalten und keine direkten Angaben zum Verlauf der Oberfläche der Makromoleküle. Auch hier ist der Aufwand sehr hoch.

Die Struktur von Proteinen lässt sich auch mit Hilfe von Kryo-Elektronenmikroskopie (Kryo-EM) bestimmen. Bei diesem Verfahren, wird eine große Zahl von Bilder aus Elektronen aufgenommen, die an vielen einzelnen Proteinen oder Proteinkomplexen gestreuten wurden, und die Bilder werden mittels Computer-Algorithmen so gemittelt, dass die Struktur zutage kommt. Um die gewünschte Struktur zu erreichen, erfordert dieses Verfahren höchstauflösende Elektronenmikroskope und die Präparation der Probe bei tiefen Temperaturen. Außerdem ist es sehr teuer, aufwändig und mit physiologischen Umgebungsbedingungen der Proteine nicht kompatibel. Darüber hinaus lassen sich keine physikalischen und chemischen Eigenschaften der Oberfläche der zu untersuchenden Makromoleküle oder Komplexe direkt bestimmen.

Weiterhin ist es bekannt, die Tertiärstruktur von Proteinen mit Hilfe künstlicher Intelligenz auf Grundlage ihrer Primärstruktur, d. h. ihrer Aminosäuresequenz, und von Strukturinformationen vorherzusagen, die zu anderen Makromolekülen mit bekannter Aminosäuresequenz vorhanden sind. Eine solche Vorhersage auf Basis künstlicher Intelligenz wird beispielsweise von dem Computerprogramm AlphaFold der Firma GOOGLE gemacht. Die vorhergesagten Tertiärstrukturen sind zumindest bislang noch mit großen Fehlern behaftet. Die Tertiärstruktur wird nicht direkt bestimmt, sondern nur aufgrund einer Plausibilitätsbetrachtung abgeschätzt.

Außerdem ist keines dieser bekannten Verfahren dazu geeignet, die Oberfläche eines Proteins direkt in einer lebenden Zelle zu kartieren. Die durch die bekannten Verfahren bereitgestellten Informationen betreffen die interessierende Oberfläche der Makromoleküle nur indirekt. Direkt beziehen sie sich auf die atomare Struktur der Makromoleküle, die allein noch keine Aussage über die tatsächliche Bindungsfähigkeit der Makromoleküle in ihrer nativen Umgebung zulässt.

### AUFGABE DER ERFINDUNG

Der Erfindung liegt die Aufgabe zugrunde, ein Verfahren zum Kartieren der Oberfläche eines Makromoleküls aufzuzeigen, das die genannten Nachteile beseitigt.

### WEITERER STAND DER TECHNIK

Aus der EP 3 055 674 B1 ist ein Verfahren zum Abbilden einer Probe bekannt, bei dem ein fluoreszentes Teilchen in der Probe in einem räumlich begrenzten Minimum einer Lichtintensitätsverteilung von Fluoreszenzanregungslicht angeordnet wird und Bewegungen des Teilchens in der Probe mit dem Minimum der Lichtintensitätsverteilung verfolgt werden. Dazu wird die Lichtintensitätsverteilung in der Probe so bewegt, dass eine Rate von von dem Teilchen emittierten Fluoreszenzlichtphotonen minimal bleibt. Die aktuelle Position des Minimums der Lichtintensitätsverteilung in der Probe wird der aktuellen Position des Teilchens in der Probe gleichgesetzt. Daraus wird eine Verweildauer des Teilchens für jeden einer Mehrzahl von Bereichen der Probe bestimmt und eine Verteilung der Verweildauern über die Probe abgebildet. Dieses Verfahren kann mit verschiedenen fluoreszenten Teilchen durchgeführt werden, die mit Fluoreszenzanregungslicht unterschiedlicher Wellenlängen zur Fluoreszenz angeregt werden können. Das bekannte Verfahren kann auch für jedes einer Mehrzahl von fluoreszenten Teilchen mit gleicher oder unterschiedlicher Wellenlänge des Fluoreszenzanregungslichts durchgeführt werden. Weiterhin können photoaktivierbare Fluorophore als fluoreszente Teilchen verwendet werden.

Aus der EP 3 372 989 A1 ist ein Verfahren zum räumlichen Messen einer nanoskaligen Struktur bekannt. Die Struktur wird an verschiedenen Stellen mit Fluoreszenzmarkern markiert. In einem lokalen Minimum einer Intensitätsverteilung von Fluoreszenzverhinderungslicht werden die Fluoreszenzmarker mit Anregungslicht zur Emission von Fluoreszenzlicht angeregt. Dabei wird das lokale Minimum an verschiedenen Positionen in einem Nahbereich in der Probe angeordnet, dessen Abmessungen nicht größer als die Beugungsgrenze bei der Wellenlänge des Anregungslichts und der Wellenlänge des Fluoreszenzlichts sind. Das aus der Probe emittierte Fluoreszenzlicht wird getrennt für die einzelnen Fluoreszenzmarker und für die verschiedenen Positionen des Minimums registriert; und die Positionen der einzelnen Fluoreszenzmarker in der Probe werden aus den für den jeweiligen Fluoreszenzmarker für die verschiedenen Positionen des Minimums registrierten Intensitäten des Fluoreszenzlichts bestimmt.

Aus der EP 3 523 631 B1 sind auch mit MinFlux bezeichnete Verfahren zum räumlichen hochauflösenden Bestimmen des Orts eines vereinzelten, mit Anregungslicht zur Emission von Lumineszenzlicht anregbaren Moleküls in einer Probe bekannt. Das Anregungslicht wird mit einer Intensitätsverteilung auf die Probe gerichtet, die ein lokales Minimum aufweist. Das Minimum wird an verschiedenen Positionen in der Nähe des Moleküls angeordnet. Aus den dabei registrierten Intensitäten des Lumineszenzlichts von dem Molekül wird die Position des Moleküls in der Probe bestimmt. Mit diesen bekannten Verfahren ist die Position des Moleküls in der Probe mit einer Präzision im Bereich zwischen 0,5 und 20 nm bestimmbar. Die bekannten Verfahren können dazu angewendet werden, ein sich in der Probe bewegendes Molekül zu tracken, d. h. seine Position zeitlich zu verfolgen.

GWOSCH KLAUS C ET AL, "MINFLUX nanoscopy delivers 3D multicolor nanometer resolution in cells", NATURE METHODS, NATURE PUBLISHING GROUP US, NEW YORK, Band 17, Nr. 2, Seiten 217-224,13. Januar 2020, offenbaren ein MinFlux-Verfahren mit den Schritten: Einbringen mindestens einer fluoreszenten Sonde in ein Medium, in das ein Makromolekül eingebettet ist, Bestimmen einer Mehrzahl von räumlichen Positionen der mindestens einen fluoreszenten Sonde gegenüber dem Makromolekül durch Lokalisation der mindestens einen vereinzelten fluoreszenten Sonde mit einer einfachen Standardabweichung von nicht mehr als 2 nm, wobei von der vereinzelten fluoreszenten Sonde emittierte Fluoreszenzlichtphotonen registriert werden, und Erstellen einer dreidimensionalen Abbildung der Mehrzahl von räumlichen Positionen der mindestens einen fluoreszenten Sonde sowie einer Konturprojektion auf die x-y-Ebene.

Aus WEBER MICHAEL ET AL, "MINSTED nanoscopy enters the Angstrom localization range", https://www.biorxiv.org/content/10.1101/2022.03.18.484906v1, geposted am 19. März 2022, danach veröffentlicht in NAT BIOTECHNOL, Band 41, Seiten 569-576, April 2023. ist ein MinSTED genanntes Verfahren bekannt, bei dem die Position eines vereinzelten fluoreszenten Moleküls mit Hilfe von überlagerten Intensitätsverteilungen von Fluoreszenzanregungslicht und Fluoreszenzverhinderungslicht bestimmt wird, wie sie aus der STED-Rasterfluoreszenzmikroskopie bekannt sind. Die Probe wird jedoch nicht mit der Nullstelle des Fluoreszenzverhinderungslichts und dem damit überlagerten Fokus des Fluoreszenzanregungslichts abgescannt, sondern die Nullstelle wird an einzelnen sich schnell verändernden Positionen in der Umgebung des zu lokalisierenden Moleküls angeordnet. Auf Basis von 2.000 dabei registrierten Fluoreszenzlichtphotonen kann die Position des fluoreszenten Moleküls mit einer Präzision bestimmt werden, deren einfache Standardabweichung kleiner als 0,5 nm ist.

WEBER MICHAEL ET AL, "MINSTED fluorescence localization and nanoscopy", NATURE PHOTONICS, NATURE PUBLISHING GROUP UK, LONDON, Band 15, Nr. 5, Seiten 361-366, 15. März 2021, offenbaren bereits ein MinSTED-Verfahren zur Lokalisierung vereinzelter fluoreszierender Sonden mit einer einfachen Standardabweichung von 1-3 nm. Als Anwendungsbeispiel wird die Darstellung der Verteilung von mit dem Fluorophor ONB-2SiR markierten Mic60 Proteinen in der inneren Membran von Mitochondrien in menschlichen Zellen beschrieben.

### LÖSUNG

Die Aufgabe der Erfindung wird durch ein Verfahren zum Kartieren der Oberfläche eines Makromoleküls mit den Merkmalen des unabhängigen Patentanspruchs 1 gelöst. Bevorzugte Ausführungsformen des erfindungsgemäßen Verfahrens sind in den abhängigen Patentansprüchen definiert.

### BESCHREIBUNG DER ERFINDUNG

Zum erfindungsgemäßen Kartieren der Oberfläche eines Makromoleküls wird mindestens eine fluoreszente Sonde in ein Medium eingebracht, in das das Makromolekül bereits eingebettet ist oder zusammen mit der mindestens einen fluoreszenten Sonde oder noch später eingebettet wird. Eine Mehrzahl von räumlichen Positionen der mindestens einen fluoreszenten Sonde gegenüber dem Makromolekül wird durch Lokalisation der mindestens einen vereinzelten fluoreszenten Sonde mit einer einfachen Standardabweichung von nicht mehr als 2 nm bestimmt, wobei von der vereinzelten fluoreszenten Sonde emittierte Fluoreszenzlichtphotonen registriert werden. Dann wird eine die bestimmten räumlichen Positionen gegenüber dem Makromolekül abgrenzende Grenzfläche bestimmt. Aus dieser Grenzfläche wird eine dreidimensionale Karte zumindest eines Teils der Oberfläche des Makromoleküls erstellt.

Als Medium, in das das Makromolekül eingebettet ist, kann das erfindungsgemäße Verfahren die natürliche Umgebung des Makromoleküls, beispielsweise in einer Zelle, auch einer lebenden Zelle, nutzen. Alternativ handelt es sich bei dem Medium um ein solches, in das das Makromolekül speziell zur Durchführung des erfindungsgemäßen Verfahrens eingebettet wird. In jedem Fall wird in das Medium mindestens eine fluoreszente Sonde eingebracht. Dabei ist unter der mindestens einen fluoreszenten Sonde mindestens eine einzelne fluoreszente Einheit zu verstehen. In der Regel werden mehrere solche fluoreszenten Einheiten gleichzeitig oder nacheinander in das Medium eingebracht, weil für das Erstellen der dreidimensionalen Karte eine Vielzahl der räumlichen Positionen der mindestens einen fluoreszenten Sonde gegenüber dem Makromolekül mit einer hohen Präzision bestimmt werden muss, wofür viele Photonen von der mindestens einen fluoreszenten Sonde benötigt werden. Daher besteht die Gefahr, dass die jeweilige fluoreszente Sonde dauerhaft photochemisch gebleicht oder zumindest für längere Zeit in einen Dunkelzustand überführt wird und durch eine andere fluoreszente Sonde ersetzt werden muss. Die jeweilige fluoreszente Sonde weist einen Fluorophor, d. h. einen fluoreszenten Teil auf. Daneben kann die fluoreszente Sonde weitere, mit dem fluoreszenten Teil zusammenhängende Teile aufweisen, um ihre Eigenschaften in gewünschter Weise einzustellen. Hierzu werden noch konkrete Beispiele gegeben werden. Ein Fluorophor, d. h. der fluoreszente Teil der fluoreszenten Sonde, weist einen typischen Durchmesser von etwa 1 bis 2 nm auf. Beim Bestimmen der räumlichen Position der mindestens einen fluoreszenten Sonde gegenüber dem Makromolekül wird die genaue Position eben dieses Fluorophors oder fluoreszenten Teils der fluoreszenten Sonde bestimmt. Die dabei zu erreichende Präzision mit einer einfachen Standardabweichung nicht größer als 2 nm kann mit verschiedenen hochauflösenden Verfahren der so genannten Lokalisation erreicht werden, bei denen von der fluoreszenten Sonde emittierten Fluoreszenzlichtphotonen registriert werden. Hierzu zählen auch Verfahren, die als PALM oder STORM bezeichnet werden und bei denen die Präzision bei der Bestimmung der jeweiligen Position der vereinzelten Sonde mit der Wurzel aus der Anzahl der registrierten Fluoreszenzlichtphotonen ansteigt. Bevorzugte Verfahren der Lokalisation werden weiter unten angegeben.

Bei dem erfindungsgemäßen Verfahren wird mit Hilfe der mindestens einen fluoreszenten Sonde nicht der Raum sondiert, in dem sich die fluoreszente Sonde befindet, sondern im Gegenteil der Raum, in dem sich das Makromolekül befindet und der daher für die Sonde unzugänglich ist. Die räumlichen Positionen der mindestens einen fluoreszenten Sonde bilden mit anderen Worten ein das Makromolekül auslassendes dreidimensionales Negativbild aus. Die Oberfläche dieses Negativbilds, d. h. die die bestimmten räumlichen Positionen der fluoreszenten Sonde gegenüber dem Makromolekül abgrenzende Grenzfläche entspricht im Wesentlichen der interessierenden Oberfläche des Makromoleküls. Die Grenzfläche ist dabei mit der interessierenden Oberfläche zumindest nicht exakt identisch, sondern unterscheidet sich hiervon in Abhängigkeit von den Eigenschaften der fluoreszenten Sonde. Auch dies wird weiter unten näher ausgeführt werden. Das Ergebnis des erfindungsgemäßen Verfahrens ist die dreidimensionale Karte zumindest eines Teils der Oberfläche des Makromoleküls, die im Vergleich zu den bekannten Verfahren der Strukturanalyse auf sehr direktem Wege gewonnen wurde und daher die Oberfläche des Makromoleküls sehr genau nachzeichnet. Insbesondere werden mit dem erfindungsgemäßen Verfahren Taschen in der Oberfläche oder andere räumliche Strukturen, mit denen Funktionalitäten des Makromoleküls, wie beispielsweise Bindungsplätze verbunden sind, nicht nur erkannt, sondern auch genau beschrieben.

Die Ortsauflösung der mit dem erfindungsgemäßen Verfahren erstellten Karte hängt von der Flächendichte der an der Oberfläche des Makromoleküls bestimmten räumlichen Positionen der fluoreszenten Sonde ab. Je höher die Flächendichte desto höher ist die Ortsauflösung. Vorzugsweise werden so viele räumliche Positionen der mindestens einen fluoreszenten Sonde bestimmt, dass eine mittlere Flächendichte der an der Oberfläche des Makromoleküls bestimmten räumlichen Positionen mindestens 25 Positionen je 100 Quadratnanometer (10 nm x 10 nm) beträgt. Besonders bevorzugt sind es mindestens 50, noch mehr bevorzugt mindestens 100 und am meisten bevorzugt mindestens 200 Positionen je 100 Quadratnanometer Oberfläche. Das erfindungsgemäße Verfahren zielt aber weniger darauf ab, die Ortsauflösung bekannter Verfahren der Strukturanalyse beim Bestimmen der Tertiärstruktur eines Makromoleküls zu verbessern oder überhaupt nur unbedingt zu erreichen, sondern darauf, zu der Oberfläche des Makromoleküls, deren Verlauf mit ausreichend hoher Ortsauflösung bestimmt wird, zusätzliche Informationen zu gewinnen, die direkte Aussagen über möglichen Bindungen anderer Moleküle und Makromoleküle an das untersuchte Makromolekül erlauben.

Vorzugsweise wird nicht nur die die bestimmten räumlichen Positionen der mindestens einen fluoreszenten Sonde gegenüber dem Makromolekül abgrenzende Grenzfläche als solche bestimmt, sondern auch eine lokale Flächendichte der räumlichen Positionen längs der Grenzfläche erfasst und in die dreidimensionale Karte eingetragen. Die lokale Flächendichte der räumlichen Positionen an der Grenzfläche ist dann, wenn die Dichte der räumlichen Positionen außerhalb des Makromoleküls grundsätzlich überall gleich sein sollte, ein Hinweis auf eine Affinität der fluoreszenten Sonde zu einem speziellen Bereich der Oberfläche des Makromoleküls. So wird zusätzlich zu ihrem räumlichen Verlauf eine weitere Information über die Oberfläche des Makromoleküls gewonnen. Diese Information ist von den Eigenschaften der mindestens einen fluoreszenten Sonde abhängig.

Ganz generell ist es vorteilhaft, beim Erstellen der dreidimensionalen Karte Eigenschaften der mindestens einen fluoreszenten Sonde zu berücksichtigen. Bei diesen zu berücksichtigenden Eigenschaften handelt es sich z. B. um die Abmessungen der mindestens einen fluoreszenten Sonde, die einen räumlichen Abstand zwischen den bestimmten räumlichen Positionen und der eigentlich interessierenden Oberfläche des Makromoleküls bestimmen. Weiterhin zählen zu diesen Eigenschaften physikalische und/oder chemische Affinitäten der mindestens einen fluoreszenten Sonde zu speziellen Bereichen der Oberfläche. Mit Hilfe dieser Affinitäten kann die Lage der speziellen Bereiche der Oberfläche erfasst werden.

Konkret können bei dem erfindungsgemäßen Verfahren, aus den bestimmten räumlichen Positionen und den Eigenschaften insbesondere von fluoreszenten Sonden, die zumindest vorübergehend gegenüber dem Makromolekül in dem Medium beweglich gewesen sind, Bindungsaffinitäten und/oder Bindungskonstanten für Moleküle mit vorgegebenen physikalischen und/oder chemischen Affinitäten abgeleitet und in die dreidimensionale Karte eingetragen werden. Die Bestimmung solcher Bindungsaffinitäten und/oder Bindungskonstanten mit Hilfe der fluoreszenten Sonden ist ein erheblicher Vorteil des erfindungsgemäßen Verfahren gegenüber allen Verfahren der Strukturanalyse, bei denen solche Bindungsaffinitäten und/oder Bindungskonstanten indirekt aus der räumlichen und chemischen Struktur eines Makromoleküls abgeleitet werden müssen.

Zu den voranstehend ausgeführten Zwecken kann die mindestens eine fluoreszente Sonde gezielt mit einer Affinitätsgruppe versehen werden, die so ausgewählt ist, dass sie eine ausschließlich oder zumindest erhöhte Affinität zu interessierenden Bereichen der Oberfläche des Makromoleküls mit speziellen chemischen und/oder physikalischen Eigenschaften aufweist. Konkret kann es sich bei diesen physikalischen und/oder chemischen Eigenschaften um Polarität, Hydrophilie, Lipophilie, Bindungsstärke für Bindungen durch Van-der-Waals-Kräfte oder Wasserstoffbrücken oder elektrostatische Anziehung oder dergleichen handeln. Es versteht sich, dass die komplette Oberfläche des Makromoleküls nicht allein mit mindestens einer Sonde mit einer einzigen Affinitätsgruppe, die eine ausschließliche Affinität zu speziellen Bereichen der Oberfläche des Makromoleküls hat, kartiert werden kann. Vielmehr sind für das vollständige Kartieren der Oberfläche entweder fluoreszente Sonden mit Affinitätsgruppen, die alle Bereiche der Oberfläche des Makromoleküls abdecken, zu verwenden, oder ist zumindest eine Sonde einzusetzen, die alle Bereiche der Oberfläche des Makromoleküls mit ihren räumlichen Positionen abtastet.

Es versteht sich, dass zum Bestimmen der räumlichen Positionen der mindestens einen fluoreszenten Sonde gegenüber dem Makromolekül die Raumlage des Makromoleküls bekannt sein muss. Dabei reicht jedoch aus, dass die Raumlage des Makromoleküls jeweils beim Bestimmen zumindest einiger der räumlichen Positionen der mindestens einen fluoreszenten Sonde dieselbe ist. In diesem Fall können die jeweils für eine Raumlage gewonnenen niedrig aufgelösten Negativbilder des Makromoleküls mit Hilfe von Computeralgorithmen, wie sie grundsätzlich beispielsweise aus der Kryo-EM bekannt sind, zu einem höher aufgelösten Negativbild zusammengefasst werden. Dennoch ist es vorteilhaft, die Raumlage des Makromoleküls über das Bestimmen aller oder zumindest möglichst vieler der räumlichen Positionen der mindestens einen fluoreszenten Sonde hinweg zu kennen oder jedenfalls festzuhalten. Dazu kann die Raumlage des Makromoleküls durch Koppeln des Makromoleküls in fester Orientierung an einen festen Ankoppelplatz in dem Medium vorgegeben werden und/oder mit dem Medium, in das es eingebettet ist oder wird, fixiert werden. Alternativ oder zusätzlich kann die Raumlage durch Bestimmen mindestens einer räumlichen Markerposition mindestens eines an dem Makromolekül angebrachten Positionsmarkers bestimmt werden. Solche Positionsmarker können auch getrackt werden, um die Raumlage des Makromoleküls fortlaufend zu erfassen. Dies kann dann sinnvoll sein, wenn das Makromolekül in dem Medium beweglich ist.

Vorzugsweise erfolgt das Bestimmen der Mehrzahl der räumlichen Positionen der mindestens einen fluoreszenten Sonde gegenüber dem Makromolekül durch Lokalisation gemäß eines der als MinFlux oder MinSTED bekannten Verfahren. Mit diesen Verfahren ist das Bestimmen der räumlichen Positionen der mindestens einen fluoreszenten Sonde mit der geforderten Präzision, deren einfache Standardabweichung nicht größer als 2 nm ist, auf Basis relativ weniger detektierter Fluoreszenzlichtphotonen möglich. Insbesondere kann in vorteilhafter Weise auch eine Präzision mit einer einfachen Standardabweichung von nicht mehr als 1 nm und sogar auch von nicht mehr als 0,5 nm erreicht werden. So kann die interessierende Oberfläche des Makromoleküls mit besonders großer Ortsauflösung kartiert werden. Wie bereits ausgeführt wurde, sind grundsätzlich aber auch andere hochauflösende Verfahren der Lokalisation zum Bestimmen der räumlichen Positionen der mindestens einen fluoreszenten Sonde anhand des von ihr emittierten Fluoreszenzlichts anwendbar.

Alle hochauflösenden Verfahren der Lokalisation, mit denen die räumlichen Positionen der mindestens einen fluoreszenten Sonde mit der geforderten hohen Präzision erfasst werden können, erfordern, dass die mindestens eine fluoreszente Sonde beim Bestimmen ihrer räumlichen Positionen vereinzelt ist, ihre Fluoreszenzlichtphotonen also von den Fluoreszenzlichtphotonen anderer fluoreszenter Sonden abtrennbar ist, insbesondere aufgrund eines ausreichenden räumlichen Abstands der fluoreszenten Sonden. Dieser ausreichende räumliche Abstand kann zumindest im Mittel dadurch erreicht werden, dass die mindestens eine fluoreszente Sonde mit einer nur geringen räumlichen Konzentration in das Medium eingebracht wird. Dabei kommt es aber ausschließlich auf eine geringe räumliche Konzentration der jeweils tatsächlich fluoreszenten Sonden in dem Medium an. Derzeit nicht in einem fluoreszenten Zustand befindliche Sonden sind nicht relevant. Unter einem fluoreszenten Zustand einer Sonde wird hier verstanden, dass die Sonde in diesem Zustand durch Fluoreszenzanregungslicht zur Emission von Fluoreszenzlichtphotonen anregbar ist. Mit dem fluoreszenten Zustand ist hier hingegen kein bereits durch Fluoreszenzanregungslicht angeregter elektronischer Zustand der Sonde gemeint, bei dessen Relaxation in ihren Grundzustand sie ein Fluoreszenzlichtphoton emittiert.

Die räumlichen Positionen der mindestens einen fluoreszenten Sonde, die bei dem erfindungsgemäßen Verfahren bestimmt werden, können von der mindestens einen fluoreszenten Sonde durch Relativbewegungen gegenüber dem Makromolekül in dem Medium erreicht werden. Die Beweglichkeit der fluoreszenten Sonde gegenüber dem Makromolekül kann dabei ganz oder im Wesentlichen auf Diffusion beruhen. In jedem Fall kann eine Diffusionsgeschwindigkeit der mindestens einen fluoreszenten Sonde in dem Medium durch eine Zusammensetzung und/oder eine Temperatur des Mediums und/oder Abmessungen der fluoreszenten Sonde eingestellt werden. Mit der Zusammensetzung des Mediums kann insbesondere dessen Viskosität definiert werden, die häufig temperaturabhängig ist. Die Temperatur des Mediums beeinflusst auch die thermische Anregung der Diffusion der mindestens einen fluoreszenten Sonde. Die Abmessungen der fluoreszenten Sonde wirken sich wieder über die Viskosität des Mediums auf ihre Diffusionsgeschwindigkeit aus. Auch durch eine chemische oder physikalische Affinität der fluoreszenten Sonde zu dem Medium, wie zum Beispiel ihrer Polarität oder Ladung, kann auf die Diffusionsgeschwindigkeit Einfluss genommen werden. Konkret kann als einbettendes Medium ein glycerinhaltiges Medium eingesetzt werden, mit dessen Temperatur und/oder Glyceringehalt und/oder Wassergehalt die Diffusionsgeschwindigkeit in weiten Grenzen einstellbar ist. Ähnliches lässt sich mit Thiodiethanol (TDE) erreichen, das dem Fachmann/Fachfrau sowohl der Elektronenmikroskopie als auch der Fluoreszenzmikroskopie bekannt ist. Bei der Einstellung tiefer Temperaturen kann mit Hilfe beispielsweise von TDE die Bildung von Eiskristallen in dem Medium vermieden werden, auch wenn es sich bei dem Medium um die natürliche Umgebung des Makromoleküls in einer biologischen Zelle handelt. Bei der Wahl des Mediums sind auch dessen optische Eigenschaften zu berücksichtigen, um keine störenden Aberrationen beim Einstrahlen von Fluoreszenzanregungslicht in das Medium und/oder beim Registrieren von aus dem Medium emittierten Fluoreszenzlichtphotonen einzuführen, wie es zum Bestimmen der räumlichen Positionen der mindestens einen fluoreszenten Sonde durch Lokalisation erforderlich ist. Solche Aberrationen reduzieren die beim Bestimmen der räumlichen Positionen der mindestens einen fluoreszenten Sonde erreichbare Präzision.

Relativbewegungen der mindestens einen fluoreszenten Sonde gegenüber dem Makromolekül können auch durch eine externe Anregung des Mediums zu Schwingungen und/oder durch eine Strömung des Mediums und/oder durch Bewegen des Makromoleküls gegenüber dem Medium und/oder durch ein elektrisches oder magnetisches Feld, das Kräfte auf die mindestens eine fluoreszente Sonde in dem Medium ausübt, hervorgerufen werden. Dabei empfiehlt es sich, die Richtung der Schwingungen, der Strömung, der Bewegungen bzw. des elektrischen oder magnetischen Felds zu variieren, um die interessierende Oberfläche des Makromoleküls in allen räumlichen Richtungen gleichermaßen zu kartieren. Zumindest sollte die Richtung einer Strömung des Mediums oder eines elektrischen oder magnetischen Felds über das Bestimmen der räumlichen Positionen der mindestens einen fluoreszenten Sonde hinweg umgekehrt werden.

Alternativ oder zusätzlich zu einer Relativbewegung der mindestens einen fluoreszenten Sonde gegenüber dem Makromolekül in dem Medium können die räumlichen Positionen der mindestens einen fluoreszenten Sonde, die bei dem erfindungsgemäßen Verfahren bestimmt werden, unter Vereinzeln wechselnder Teilmengen einer in dem Medium enthaltenen Gesamtzahl von gleichen fluoreszenten Sonden erreicht werden. Bei einer ausreichenden räumlichen Konzentration der Gesamtzahl der gleichen fluoreszenten Sonden kann eine ausreichende Anzahl an räumlichen Positionen auch ohne jegliche Relativbewegungen der einzelnen fluoreszenten Sonden gegenüber dem Medium erreicht werden. Das Vereinzeln der fluoreszenten Sonden für das Bestimmen ihrer räumlichen Positionen, so dass die von der jeweiligen vereinzelten fluoreszenten Sonde emittierten Fluoreszenzlichtphotonen separat registriert werden können, kann in grundsätzlich bekannter Weise z. B. durch Ein- und/oder Ausschalten schaltbarer fluoreszenter Sonden erfolgen. Dabei kann das Ein- und/oder Ausschalten grundsätzlich durch jedes physikalische oder chemische Signal erfolgen. Dabei kann das Ein- und/oder Ausschalten zeitlich gesehen stochastisch, also spontan, erfolgen, wobei die Schaltraten durch chemische Bedingungen, wie pH, Konzentrationen spezieller Puffer usw. eingestellt werden können, die dem Fachmann und der Fachfrau aus der Literatur über Einzelmolekülschaltmikroskopie bekannt sind.

Häufig wird hierfür Schaltlicht eingesetzt werden. So kann das Vereinzeln auch unter Aktivieren photoaktivierbarer fluoreszenter Sonden mit Aktivierungslicht erfolgen, wobei das Aktivierungslicht dieselbe Wellenlänge wie oder eine andere Wellenlänge als anschließend zum Anregen der fluoreszenten Sonden zur Emission von Fluoreszenzlichtphotonen eingesetztes Fluoreszenzanregungslicht aufweisen kann. Weiterhin können zum Vereinzeln der fluoreszenten Sonden fluorogene fluoreszente Sonden verwendet werden, die aufgrund eines Bindungsprozesses in ihren fluoreszenten Zustand überführt werden. Besonders bevorzugt ist es in diesem Fall, wenn die Bindungen, die die fluorogenen fluoreszenten Sonden in ihren fluoreszenten Zustand überführen, solche an die interessierende Oberfläche des Makromoleküls sind. Die fluorogenen fluoreszenten Sonden sind dann selektiv an der Oberfläche des Makromoleküls in ihrem fluoreszenten Zustand, und es werden keine oder zumindest weniger räumliche Positionen der fluoreszenten Sonde im Volumen des Mediums bestimmt, die keine Informationen zu der eigentlich interessierenden Oberfläche des Makromoleküls beinhalten.

Auch ganz grundsätzlich kann das Bestimmen der räumlichen Positionen der mindestens einen fluoreszenten Sonde auf den Bereich der erwarteten Oberfläche des Makromoleküls konzentriert werden. Dazu kann aus anfänglich bestimmten räumlichen Positionen der mindestens einen fluoreszenten Sonde der Verlauf der Oberfläche abgeschätzt und diese Abschätzung mit jeder weiter bestimmten räumlichen Position der mindestens einen fluoreszenten Sonde verbessert werden. Alternativ oder zusätzlich kann von einer anderweitig bestimmten Raumlage eines Mittelpunkts des Makromoleküls ausgegangen werden und in zunehmendem Abstand zu diesem Mittelpunkt in allen Raumrichtungen nach räumlichen Positionen der fluoreszenten Sonde gesucht werden. Auf diese Weise werden allenfalls wenige räumliche Positionen der fluoreszenten Sonde im Volumen des Mediums bestimmt werden, die keine Informationen über die interessierende Oberfläche des Makromoleküls beinhalten.

Wie bereits angedeutet wurde, können verschiedene fluoreszente Sonden mit unterschiedlichen Affinitäten zu unterschiedlichen Bereichen der Oberfläche des Makromoleküls in das Medium eingebracht werden, wobei das Bestimmen der Mehrzahl der räumlichen Positionen der vereinzelten verschiedenen fluoreszenten Sonden getrennt erfolgt. Dabei kann die Trennung durch unterschiedliche Wellenlängen des Fluoreszenzanregungslichts oder des Fluoreszenzlichts oder auch zeitlich erfolgen, indem die verschiedenen fluoreszenten Sonden nacheinander in das Medium eingebracht werden. Auch das Bestimmen der die räumlichen Positionen abgrenzenden Grenzfläche kann für die verschiedenen fluoreszenten Sonden getrennt voneinander erfolgen, um zum Beispiel die unterschiedlichen Eigenschaften der Sonden in Bezug auf mögliche Differenzen zwischen Grenzfläche und interessierender Oberfläche berücksichtigen zu können.

Das erfindungsgemäße Verfahren zum Kartieren der Oberfläche des Makromoleküls kann parallelisiert werden. D. h., dass mehrere Kopien des Makromoleküls verwendet und parallel zueinander mit Hilfe jeweils mindestens einer fluoreszenten Sonde abgetastet werden können. Die dabei jeweils zu einer Kopie des Makromoleküls gewonnenen Informationen werden zu Gesamtinformationen über die interessierende Oberfläche des Makromoleküls zusammengefasst. Konkret können mehrere Kopien des Makromoleküls jeweils mit mindestens einer fluoreszenten Sonde in das Medium eingebettet werden, wobei es sich um ein über alle Kopien des Makromoleküls hinweg durchgehendes Medium handeln kann. Dann kann gegenüber den mehreren Kopien des Makromoleküls jeweils eine Mehrzahl von räumlichen Positionen der jeweiligen mindestens einen vereinzelten fluoreszenten Sonde bestimmt werden, und die Grenzfläche kann so bestimmt werden, dass sie die bestimmten räumlichen Positionen aller vereinzelten fluoreszenten Sonden gegenüber allen Kopien des Makromoleküls abgrenzt. Es versteht sich, dass es eine Grundvoraussetzung für das Parallelisieren des erfindungsgemäßen Verfahrens ist, dass die Raumlagen der einzelnen Kopien des Makromoleküls nicht nur jeweils zeitlich konstant bleiben, sondern für alle Kopien bekannt sind, um die mit den einzelnen Kopien gewonnenen Informationen über die Oberfläche des Makromoleküls zusammenfassen zu können. Dies kann mit Hilfe von Computerprogrammen erfolgen, wie sie aus der Strukturbestimmung mittels Kryo-EM bekannt sind.

Praktisch können die einzelnen Kopien des Makromoleküls an Ankoppelplätze angekoppelt werden, die in einem festen Raster angeordnet sind. Dann können die räumlichen Positionen der vereinzelten fluoreszenten Sonden gegenüber der jeweiligen Kopie mittels MinFlux oder MinSTED bestimmt werden, wobei die lokalen Minima oder Nullstellen der Lichtintensitätsverteilungen, die zum Bestimmen der räumlichen Positionen verwendet werden, in demselben Raster angeordnet und gemeinsam gegenüber den Kopien des Makromoleküls verlagert werden können.

Beim Erstellen der dreidimensionalen Karte zumindest eines Teils der Oberfläche des Makromoleküls aus der Grenzfläche können bereits vorhandene Strukturinformationen zu dem Makromolekül berücksichtigt werden. Diese Strukturinformationen können beispielsweise durch Röntgenstrukturanalyse, NMR, Kryo-EM oder Vorhersage mittels künstlicher Intelligenz erlangt worden sein.

Das erfindungsgemäße Verfahren kann auch wiederholt durchgeführt werden, um Veränderungen der interessierenden Oberfläche des Makromoleküls zu erfassen, insbesondere nachdem durch Änderungen physikalischer und/oder chemischer Umgebungsbedingungen eine Strukturveränderung bei dem Makromolekül hervorgerufen wurde und/oder ein weiteres Makromolekül an das Makromolekül angelagert wurde und/oder ein das Makromolekül umfassender Komplex zumindest teilweise aufgelöst wurde.

Als fluoreszente Sonden oder Fluorophore solcher fluoreszenten Sonden kommen bei dem erfindungsgemäßen Verfahren alle gängigen Fluorophore in Betracht, insbesondere solche, die kleine Übergangswahrscheinlichkeiten in ihren Triplett-Zustand oder andere Dunkelzustände aufweisen, so dass man ihre räumlichen Positionen über längere Zeit verfolgen kann. Konkrete Beispiele für geeignete Fluorophore sind Atto647N und Abberior Star 635.

Durch das Ankoppeln der Kopien des Makromoleküls an Ankoppelplätze mit bekannter Raumlage können die Raumlagen der Kopien auf wenige Nanometer genau festgelegt werden. Bei einer typischen Größe der Makromoleküle von wenigen bis einigen 10 nm, kann die Nullstelle der Lichtintensitätsverteilung zum Bestimmen der räumlichen Positionen der fluoreszenten Sonden an der interessierenden Oberfläche der Kopien des Makromoleküls daher von Anfang innerhalb eines sehr kleinen Bereichs verlagert werden, dessen Raumlage durch den jeweiligen Ankoppelplatz definiert ist. Das Raster der Nullstellen der Intensitätsverteilungen kann durch ein so genanntes Donutarray oder durch Stehwellen oder gekreuzte Stehwellen ausgebildet werden. Konkret können zwei gegenüberliegende Objektive in so genannter 4Pi-Anordnung verwendet werden. Stehwellen in z-Richtung können über ein Substrat mit einer Spiegelfläche hervorgerufen werden. Stehwellen können auch, wie grundsätzlich bekannt ist, dreidimensional wie in einem Holzstapel angeordnet werden. Die Nullstelle kann dreidimensional durch höhere Intensitäten der Lichtintensitätsverteilung begrenzt sein. Die Detektion des Fluoreszenzlichts von der fluoreszenten Sonde kann konfokal erfolgen oder mit Hilfe eines konfokalen Detektorarrays. Alternativ kann das Fluoreszenzlicht mit einer Kamera erfasst werden. Das Fluoreszenzlicht kann polarisationsselektiv oder -sensitiv erfolgen, um räumliche Orientierungen der fluoreszenten Sonde an der interessierenden Oberfläche des Makromoleküls zu erfassen. Zur besseren Unterdrückung von Hintergrund kann der Einsatz von zeitaufgelöster Fluoreszenzdetektion, welche als Time-Gating bekannt ist, vorteilhaft sein. Das Makromolekül kann beim Kartieren seiner Oberfläche gezielt, auch durch direkten Kraftangriff, deformiert werden, um spezielle Bereiche seiner Oberfläche für die fluoreszente Sonde zugänglich zu machen.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Karte die Rede ist, ist dies so zu verstehen, dass genau eine Karte, zwei Karten oder mehr Karten erstellt werden. Die in den Patentansprüchen angeführten Merkmale können durch weitere Merkmale ergänzt werden oder die einzigen Merkmale sein, die das Verfahren des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch ein erstes in ein Medium eingebettetes Makromolekül, wobei fluoreszente Sonden in das Medium eingebracht sind.
- **Fig. 2**: zeigt schematisch ein aus einer Vielzahl von durch Lokalisation bestimmten räumlichen Positionen der fluoreszenten Sonden entstehendes Negativbild des ersten Makromoleküls.
- **Fig. 3**: zeigt verschiedene Bereiche eines zweiten in ein Medium eingebetteten Makromoleküls mit unterschiedlichen in das Medium eingebetteten fluoreszenten Sonden, die unterschiedliche Affinitäten zu verschiedenen Bereichen einer Oberfläche des Makromoleküls aufweisen.
- **Fig. 4**: zeigt einen Bereich einer Oberfläche eines dritten in ein Medium eingebetteten Makromoleküls, wobei in das Medium eingebrachte Sonden beim Binden an diesen Bereich der Oberfläche in einen fluoreszenten Zustand gelangen.
- **Fig. 5**: zeigt schematisch den Aufbau einer fluoreszenten Sonde aus einem Fluorophor und einer Affinitätsgruppe.
- **Fig. 6**: zeigt ein viertes Makromolekül eingebettet in ein Medium, wobei eine Raumlage des Makromoleküls durch Ankoppeln des Makromoleküls an einen Ankoppelplatz definiert ist.
- **Fig. 7**: zeigt mehrere Kopien eines fünften Makromoleküls, die in einem festen Rastermaß an Ankoppelplätze angekoppelt sind, und eine Lichtintensitätsverteilung mit einer Anordnung von lokalen Intensitätsminima in demselben festen Rastermaß.
- **Fig. 8**: illustriert das Anlegen eines elektrischen Felds, um fluoreszente Sonden relativ zu einem sechsten in ein Medium eingebetteten Makromolekül zu bewegen.
- **Fig. 9**: illustriert eine Strömung eines Mediums um ein siebtes ortsfest angeordnetes Makromolekül.
- **Fig. 10**: ist ein Blockdiagramm einer Ausführungsform des erfindungsgemäßen Verfahrens zum Kartieren der Oberfläche eines Makromoleküls; und
- **Fig. 11**: zeigt schematisch eine als Ergebnis des erfindungsgemä0ßen Verfahrens erhaltene Karte des ersten Makromoleküls gemäß Fig. 1.

### FIGURENBESCHREIBUNG

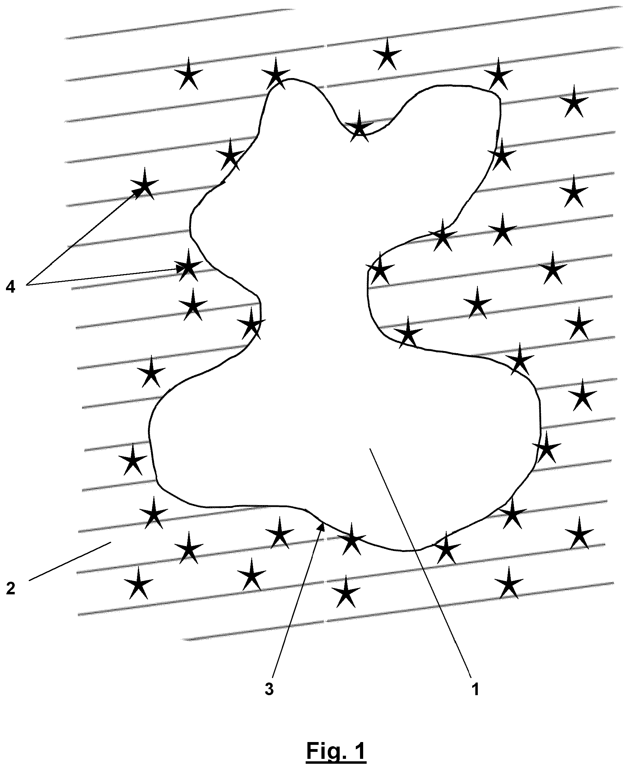

**Fig. 1** zeigt in schematischer Darstellung ein Makromolekül 1, bei dem es sich beispielsweise um ein Protein handelt und das in ein Medium 2 eingebettet ist. Bei dem Medium 2 kann es sich um ein solches handeln, das die natürliche Umgebung des Makromoleküls 1 beispielsweise in einer biologischen Zelle ausbildet. Gegenüber dieser natürlichen Umgebung kann das Medium 2 modifiziert sein. Alternativ kann es sich bei dem Medium 2 um ein spezielles Medium handeln, um die im Folgenden beschriebenen Schritte zum Kartieren einer Oberfläche 3 des Makromoleküls 1 besonders effektiv durchzuführen zu können. In das Medium 2 sind fluoreszente Sonden 4 eingebracht. Räumliche Positionen der fluoreszenten Sonden 4 gegenüber dem Makromolekül 1 werden durch Lokalisation, d. h. unter Registrieren von Fluoreszenzlichtphotonen, die von den fluoreszenten Sonden 4 emittiert werden, mit einer so hohen Präzision bestimmt, dass eine einfache Standardabweichung nicht größer als 2 nm, bevorzugt nicht größer als 1 nm und noch mehr bevorzugt nicht größer als 0,5 nm ist. Für diese Lokalisation ist die jeweilige fluoreszente Sonde 4 an ihrer jeweiligen räumlichen Position zu vereinzeln, so dass die von ihr emittierten Fluoreszenzlichtphotonen separat, d. h. getrennt von Fluoreszenzlichtphotonen von anderen fluoreszenten Sonden 4 für ihre jeweilige räumliche Position registriert werden können. Dies kann dadurch realisiert werden, dass die fluoreszenten Sonden 4 mit einer nur sehr kleinen räumlichen Konzentration in das Medium 2 eingebracht werden, wobei die verschiedenen räumlichen Positionen von den fluoreszenten Sonden 4 durch Relativbewegungen der fluoreszenten Sonden 4 gegenüber dem Makromolekül 1 erreicht werden. Alternativ oder zusätzlich können die fluoreszenten Sonden 4 dadurch vereinzelt werden, dass nur jeweils eine Teilmenge in einen tatsächlich fluoreszenten Zustand überführt oder in dem tatsächlich fluoreszenten Zustand belassen wird und die jeweilige Teilmenge die geringe räumliche Konzentration aufweist. Dann kann eine Vielzahl von räumlichen Positionen der fluoreszenten Sonden 4 bestimmt werden, ohne dass sich die fluoreszenten Sonden 4 gegenüber dem Makromolekül 1 bewegen müssen. In jedem Fall ergibt sich aus der Vielzahl der räumlichen Positionen der fluoreszenten Sonden 4 ein dreidimensionales Negativbild des Makromoleküls 1, aus dem sich der Verlauf der Oberfläche 3 ableiten lässt. Auch wenn Fig. 1 nur eine zweidimensionale Darstellung ist und die fluoreszenten Sonden nur zeigt, soweit sie in einer Schicht des Mediums 2 angeordnet sind, die quer zur Blickrichtung von Fig. 1 verläuft, werden die räumlichen Positionen der fluoreszenten Sonden 4 in allen drei Dimensionen bestimmt, um den Verlauf der Oberfläche 3 des Makromoleküls 1 in allen drei Dimensionen zu erfassen.

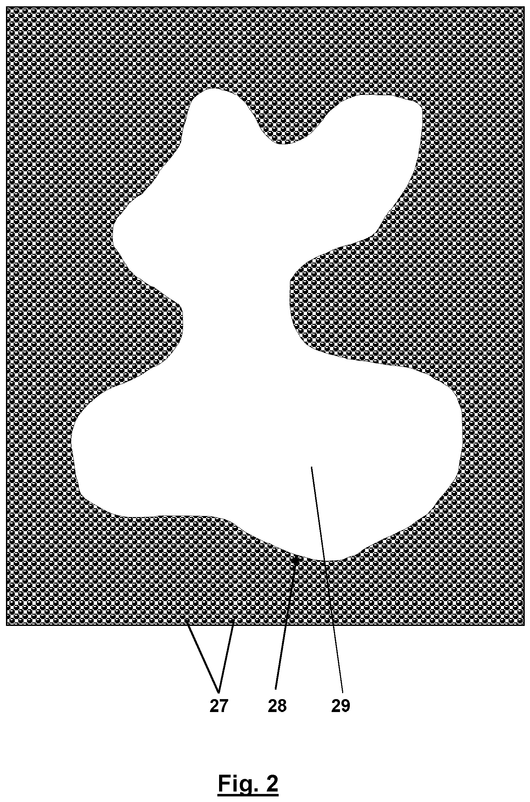

Das in **Fig. 2** dargestellte Negativbild 28, in dem die durch Lokalisation bestimmten räumlichen Positionen 27 der fluoreszenten Sonden 4 einen von dem Makromolekül 1 ausgefüllten Raum 29 auslassen, berücksichtigt ebenfalls nur die eine Schicht des Mediums 2 quer zu der Blickrichtung von Fig. 1. Die Darstellung von Fig. 2 ist dabei insbesondere insofern schematisch, als dass die durch Lokalisation bestimmten räumlichen Positionen 27 der fluoreszenten Sonden 4 der Einfachheit halber in einer regelmäßigen Anordnung dargestellt sind und nicht in ihrer tatsächlichen und ohne Affinitäten der fluoreszenten Sonden 4 zu dem Makromolekül 1 grundsätzlich stochastischen Anordnung.

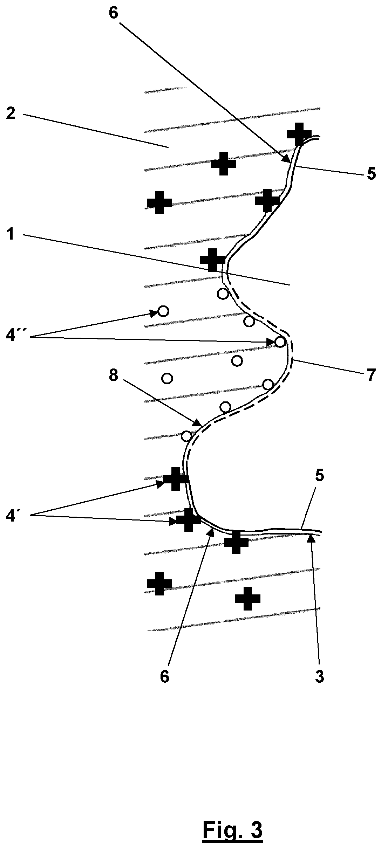

**Fig. 3** zeigt schematisch mit Kreuzen und Kreisen zwei verschiedene fluoreszente Sonden 4' und 4". Die verschiedenen Sonden 4' und 4" weisen unterschiedliche Affinitäten für unterschiedliche Bereiche der Oberfläche 3 des in das Medium 2 eingebetteten Makromoleküls 1 auf. In Fig. 3 sind mit zusätzlicher durchgezogener Linie 5 beispielsweise nicht polare Bereiche 6 der Oberfläche 3 angedeutet, für die die fluoreszenten Sonden 4' eine erhöhte Affinität aufweisen. Mit zusätzlicher gestrichelter Linie 7 ist hingegen beispielsweise ein polarer Bereich 8 angedeutet, zu dem die fluoreszenten Sonden 4" eine erhöhte Affinität aufweisen. Indem die räumlichen Positionen der unterschiedlichen fluoreszenten Sonden 4' und 4" getrennt bestimmt werden, können die unterschiedlichen Bereiche 6 und 8 beim Bestimmen des Verlaufs der Oberfläche 3 unterschieden werden.

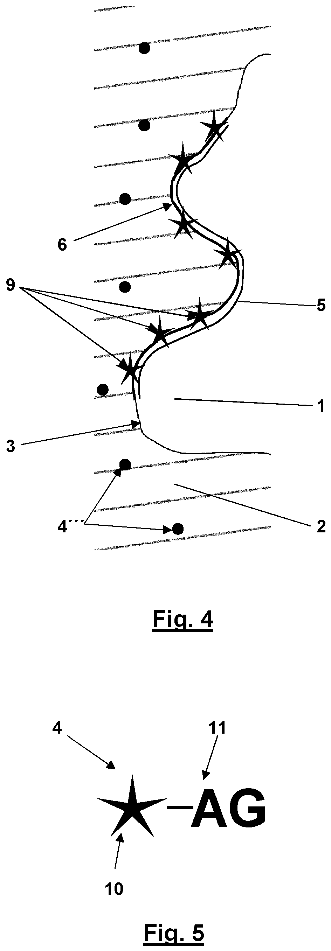

**Fig. 4** illustriert den Fall, dass fluorogene fluoreszente Sonden 4‴ in dem Medium 2 nur dann in ihren fluoreszenten Zustand 9 gelangen und ihre räumlichen Positionen entsprechend nur dann bestimmt werden können, wenn sie an einem speziellen Bereich 6 der Oberfläche 3 anbinden. Zum einen werden auf diese Weise nur räumliche Positionen der fluoreszenten Sonden 4‴ bestimmt, die Informationen zum Verlauf der Oberfläche 3 beinhalten, und zum anderen wird speziell der Bereich 6 der Oberfläche 3 erfasst, an dem die fluorogenen fluoreszenten Sonden 4‴ anbinden.

**Fig. 5** zeigt schematisch den Aufbau einer fluoreszenten Sonde 4 aus einem Fluorophor 10 und einer Aktivitäts- und/oder Affinitätsgruppe 11. Die Aktivitäts- und/oder Affinitätsgruppe 11 kann die Affinität der fluoreszenten Sonde 4 zu speziellen Bereichen 6, 8 der Oberfläche 3 des Makromoleküls 1 definieren oder der fluoreszenten Gruppe 4 fluorogene Eigenschaften verleihen oder die fluoreszente Sonde 4 photoaktivierbar, ein- oder ausschaltbar machen oder die Abmessungen der fluoreszenten Sonde 4 vergrößern, um ihre Diffusionsgeschwindigkeit in dem Medium 2 zu reduzieren, oder dergleichen.

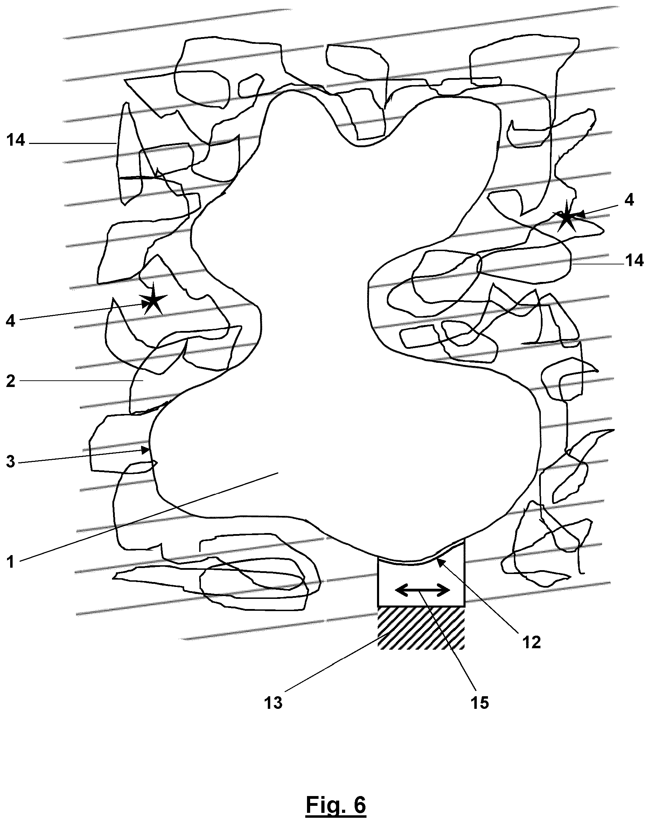

**Fig. 6** illustriert, dass das Makromolekül 1 in dem Medium 2 an einen Ankoppelplatz 12 angekoppelt ist. Dadurch weist das Makromolekül 1 in dem Medium 2 eine definierte Position und Raumlage gegenüber einer Basis 13 und damit gegenüber externen Bezugspunkten auf. Die gegenüber der Basis oder den externen Bezugspunkten bestimmten räumlichen Positionen der fluoreszenten Sonden 4 können daher in räumliche Positionen gegenüber dem Makromolekül 1 transformiert werden. In Fig. 6 ist weiter angedeutet, dass nur wenige fluoreszente Sonden 4 in das Medium 2 eingebracht sind, die sich aufgrund von Diffusion in dem Medium 2 längs ungerichteter Diffusionswege 14 bewegen. Auf diese Weise erreichen die fluoreszenten Sonden 4 verschiedene räumliche Positionen gegenüber dem Makromolekül 1, die bestimmt werden können, um den Verlauf der Oberfläche 3 des Makromoleküls 1 zu erfassen. In Fig. 6 ist zudem mit einem Doppelpfeil 15 angedeutet, dass das Makromolekül 1 beispielsweise über seinen Ankoppelplatz 12 gegenüber dem Medium 2 bewegt, beispielsweise in Schwingungen versetzt werden kann, um zusätzliche Relativbewegungen zwischen den fluoreszenten Sonden 4 und dem Makromolekül 1 zu provozieren. Es ist jedoch darauf zu achten, dass erzwungene Bewegungen des Makromoleküls 1 gegenüber dem Medium 2 nicht zu Bewegungsunschärfen beim Bestimmen der räumlichen Positionen der fluoreszenten Sonden 4 gegenüber dem Makromolekül 1 führen.

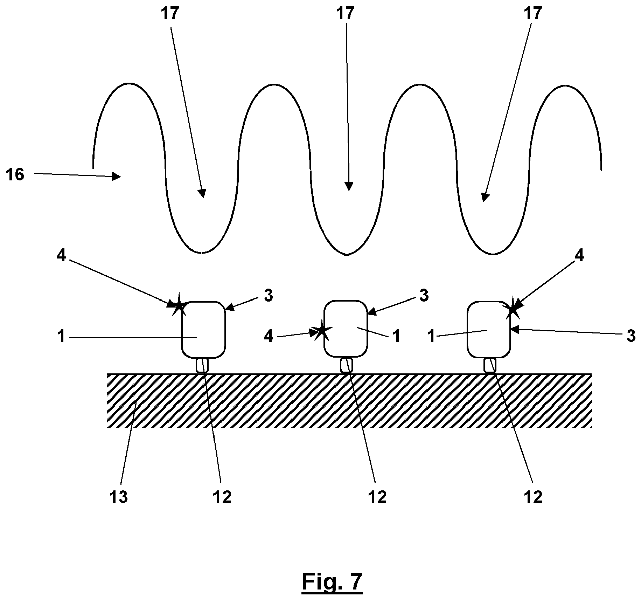

In **Fig. 7** ist schematisch dargestellt, dass mehrere Kopien des Makromoleküls 1 durch Ankoppeln an in einem festen Raster angeordnete Ankoppelplätze 12 ihrerseits in einem festen Raster gegenüber einer Basis 4 angeordnet und bzgl. ihrer Raumlagen ausgerichtet sind. Zugleich ist (sehr schematisch) eine Lichtintensitätsverteilung 16 über die Anordnung der Ankoppelplätze 12 hinweg angedeutet, die in demselben Raster beabstandete lokale Minima oder Nullstellen 17 aufweist. Wenn die Bestimmung der räumlichen Positionen der fluoreszenten Sonden 4 beispielsweise durch das als MinFlux bekannte Verfahren erfolgt, handelt es sich bei den Nullstellen 17 der Lichtintensitätsverteilung 16 um solche von Fluoreszenzanregungslichts. Bei einer Lokalisation der fluoreszenten Sonden 4 durch das als MinSTED bekannte Verfahren, handelt es sich bei den Nullstellen 17 um solche von Fluoreszenzverhinderungs- oder STED-Licht, das zusammen mit Fluoreszenzanregungslicht auf die Kopien des Makromoleküls 1 gerichtet wird. In jedem Fall kann die Lichtintensitätsverteilung 16 insgesamt gegenüber der Gesamtheit der Ankoppelplätze 12 und den daran angekoppelten Kopien des Makromoleküls 1 verschoben werden, um parallel räumliche Positionen von fluoreszenten Sonden 4 gegenüber jeder der Kopien des Makromoleküls 1 zu bestimmen.

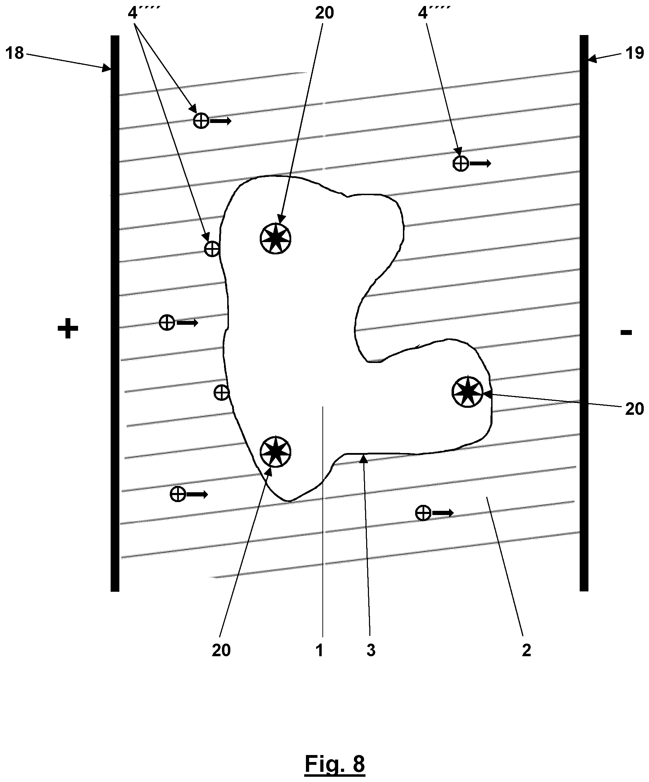

**Fig. 8** illustriert, wie fluoreszente Sonden 4"" mit einer Nettoladung durch ein elektrisches Feld zwischen einer externen Anode 18 und einer externen Kathode 19 gegenüber dem in das Medium 2 eingebetteten Makromolekül 1 bewegt werden. Da die fluoreszenten Sonden 4"" dabei räumliche Positionen an der ihrer Bewegungsrichtung abgekehrten Rückseite des Makromoleküls 1 nicht erreichen, ist es sinnvoll, die Richtung des elektrischen Felds zu variieren, zumindest einmal umzukehren. Weiterhin ist in Fig. 8 angedeutet, dass an dem Makromolekül 1 Positionsmarker 20 angebracht sind. Durch Bestimmen der räumlichen Positionen dieser mindestens drei nicht auf einer Gerade liegenden Positionsmarker 20 ist die Raumlage des Makromoleküls 1 bestimmbar und insbesondere auch nachverfolgbar, wenn sich das Makromolekül 1 in dem Medium 2 bewegen kann. Eine zumindest über die Bestimmung einiger räumlicher Positionen der fluoreszenten Sonden 4"" hinweg gleichbleibende oder bekannte Raumlage des Makromoleküls 1 ist Voraussetzung dafür, dass die räumlichen Positionen der fluoreszenten Sonden 4"" gegenüber dem Makromolekül 1 bestimmt werden können.

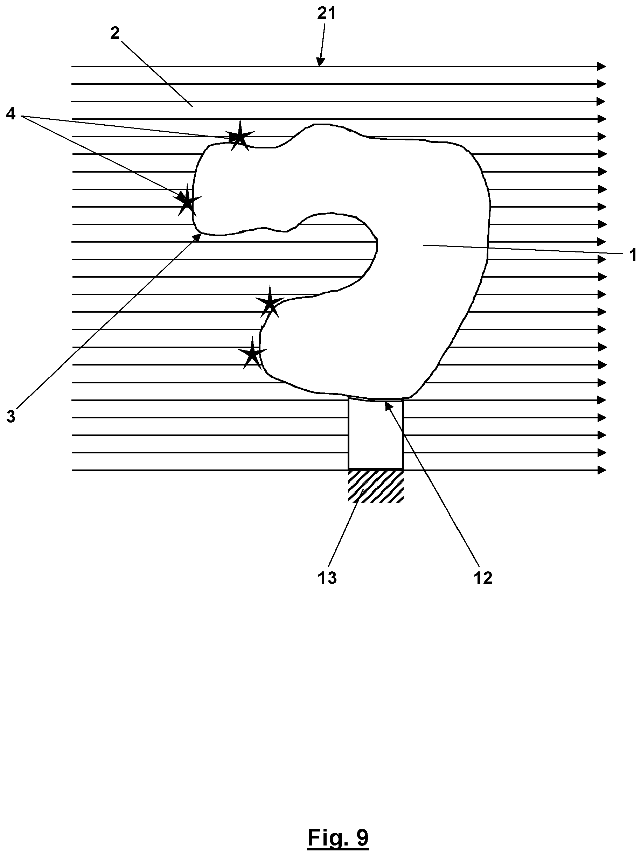

In **Fig. 9** ist angedeutet, dass das Makromolekül 1 in einer Strömung 21 des Mediums 2 mit den darin eingebrachten fluoreszenten Sonden 4 angeordnet wird, wobei das Makromolekül 1 durch Ankoppeln an einen Ankoppelplatz 12 gegenüber einer Basis 13 festgehalten wird. Auch mit der hieraus resultierenden Relativbewegung der fluoreszenten Sonden 4 gegenüber dem Makromolekül 1 erreichen die fluoreszenten Sonden 4 räumliche Positionen an der ihrer Bewegungsrichtung abgekehrten Rückseite des Makromoleküls 1 nicht und eine Variation der Richtung der Strömung 21 gegenüber dem Makromolekül 1, zumindest aber eine Umkehr der Richtung der Strömung 21, ist sinnvoll.

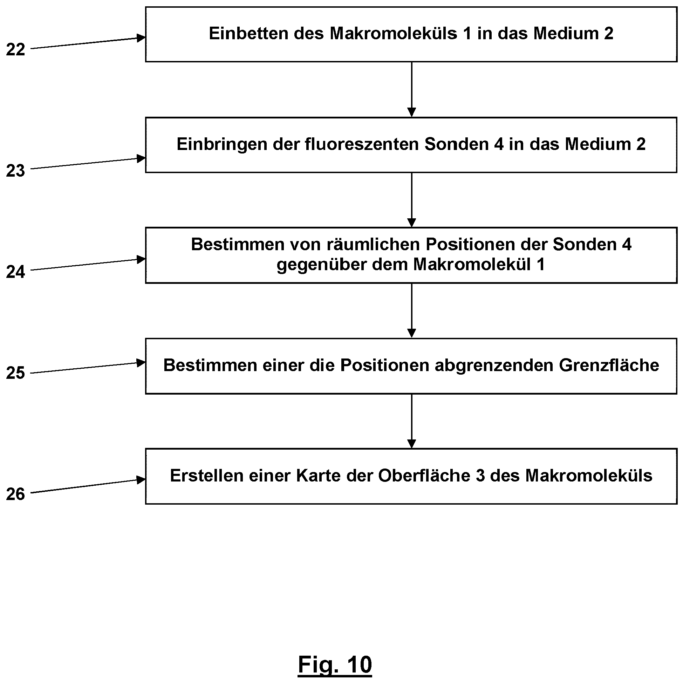

**Fig. 10** ist ein Blockdiagramm eines erfindungsgemäßen Verfahrens zum Kartieren der Oberfläche 3 des Makromoleküls 1. Ein Einbetten 22 des Makromoleküls 1 in das Medium 2 ist insoweit optional, als dass als Medium 2 die natürliche Umgebung des Makromoleküls 1, beispielsweise in einer biologischen Zelle, verwendet werden kann. Ein Einbringen 23 der fluoreszenten Sonde 4 in das Medium 2 schließt sich an. Alternativ können die fluoreszenten Sonden 4 bereits in das Medium 2 eingebracht sein, wenn das Makromolekül in das Medium 2 eingebettet wird. Beim Bestimmen 24 von räumlichen Positionen der fluoreszenten Sonden 4 gegenüber dem Makromolekül 1 kann zwischen verschiedenen fluoreszenten Sonden 4 mit verschiedenen chemischen und physikalischen Eigenschaften und daraus resultierenden unterschiedlichen Affinitäten zu unterschiedlichen Bereichen 6 und 8 der Oberfläche 3 des Makromoleküls 1 unterschieden werden. Ein Bestimmen 25 einer die bestimmten räumlichen Positionen gegenüber dem Makromolekül abgrenzenden Grenzfläche folgt. Diese Grenzfläche entspricht bereits im Wesentlichen der interessierenden Oberfläche 3 des Makromoleküls 1. Beim Erstellen 26 einer dreidimensionalen Karte des räumlichen Verlaufs der Oberfläche 3 werden jedoch Eigenschaften der fluoreszenten Sonden 4 berücksichtigt. Dabei geht es um die Abmessungen der fluoreszenten Sonden 4, die auch dann zu einem Versatz zwischen den zu ihnen bestimmten räumlichen Positionen zu der interessierenden Oberfläche 3 führen, wenn die fluoreszenten Sonden 4 direkt an die Oberfläche 3 anbinden. Weiterhin werden unterschiedliche Affinitäten der eingesetzten fluoreszenten Sonden 4 berücksichtigt, um unterschiedliche Bereiche 6 und 8 der Oberfläche 3 des Makromoleküls 1 mit unterschiedlichen physikalischen und/oder chemischen Eigenschaften in die Karte einzutragen. Beim Erstellen 26 der Karte der Oberfläche 3 können zudem aus anderen Quellen zu dem Makromolekül 1 verfügbare Strukturinformationen Berücksichtigung finden, beispielsweise solche, die durch Röntgenstrukturanalyse, NMR, Kryo-EM oder mit Hilfe von künstlicher Intelligenz aus einer Strukturformel oder Primärstruktur gewonnen wurden. Bei dem Makromolekül 1 handelt es sich insbesondere um ein Protein oder einen Proteinkomplex. Die erstellte Karte der Oberfläche 3 umfasst daher wesentliche Informationen zur tertiären Struktur des jeweiligen Proteins bzw. quartären Struktur des jeweiligen Proteinkomplexes.

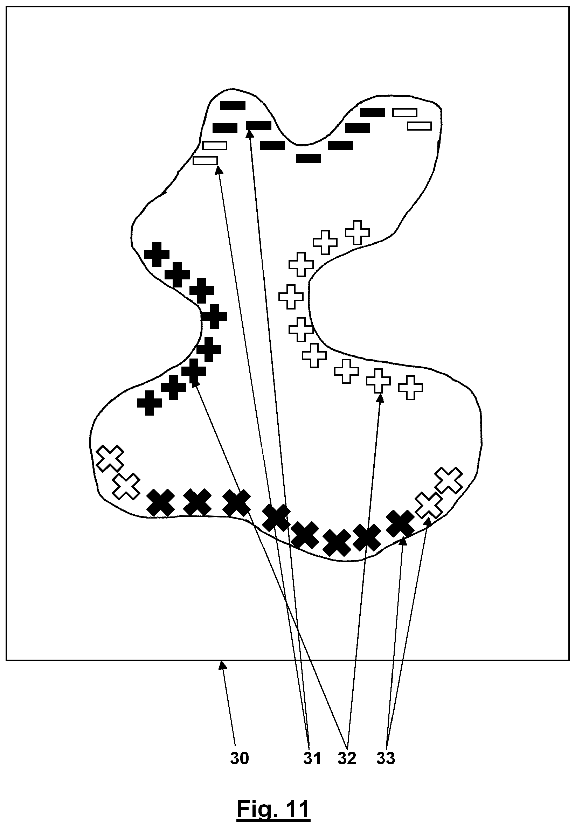

**Fig. 11** zeigt ein vereinfachtes Beispiel der Karte 30 des Makromoleküls 1 gemäß Fig. 1, die als Ergebnis des erfindungsgemäßen Verfahrens erhalten wird. Trotz der wieder nur zweidimensionalen Darstellung in Fig. 11 ist die erhaltene Karte tatsächlich dreidimensional. Mit verschiedenen Symbolen 31 bis 33 sind in Fig. 11 verschiedene Bereiche eines eingezeichneten Verlaufs 34 der Oberfläche 3 markiert, in denen das Makromolekül unterschiedliche physikalische und/oder chemische Eigenschaften an seiner Oberfläche aufweist. Eine schwächere Ausprägung dieser Eigenschaften ist dabei durch ungefüllte Symbole 31 bis 33 und eine stärkere Ausprägung dieser Eigenschaften ist durch gefüllte Symbole 31 bis 33 angezeigt. Die Ausprägung der physikalischen und/oder chemischen Eigenschaften kann in der Karte 30 auch noch differenzierter dargestellt sein, beispielsweise durch Angabe von absoluten oder relativen Bindungskonstanten, die durch ein zeitliches Verfolgen von in dem Medium 2 beweglichen fluoreszenten Sonden 4 mit ihrerseits definierten physikalischen und/oder chemischen Eigenschaften im Rahmen des erfindungsgemäßen Verfahrens ermittelt werden können. Zusammen mit dem räumlichen Verlauf 34 bestimmen die physikalischen und/oder chemischen Eigenschaften, zu denen insbesondere Polarität, Hydrophilie und Lipophilie, aber auch Bindungsstärken für Bindungen durch Van-der-Waals-Kräfte, Wasserstoffbrücken, elektrostatische Anziehung oder dergleichen zählen, die Fähigkeit oder Neigung des Makromoleküls 1 in einzelnen Bereichen seiner Oberfläche 3 Bindungen mit anderen Molekülen oder Makromolekülen einzugehen.

### BEZUGSZEICHENLISTE

- 1: Makromolekül
- 2: Medium
- 3: Oberfläche
- 4: fluoreszente Sonde
- 5: durchgezogene Linie
- 6: Bereich
- 7: gestrichelte Linie
- 8: Bereich
- 9: fluoreszenter Zustand
- 10: Fluorophor
- 11: Aktivitäts- oder Affinitätsgruppe
- 12: Ankoppelplatz
- 13: Basis
- 14: Diffusionsweg
- 15: Doppelpfeil
- 16: Lichtintensitätsverteilung
- 17: Nullstelle
- 18: Anode
- 19: Kathode
- 20: Positionsmarker
- 21: Strömung
- 22: Einbetten
- 23: Einbringen
- 24: Bestimmen von räumlichen Positionen
- 25: Bestimmen einer Grenzfläche
- 26: Erstellen
- 27: bestimmte räumliche Position
- 28: Negativbild
- 29: Raum
- 30: Karte
- 31-33: Symbol
- 34: Verlauf

## Patentansprüche

1. Verfahren zum Kartieren der Oberfläche (3) eines Makromoleküls (1) mit den Schritten
- Einbringen (23) mindestens einer fluoreszenten Sonde (4) in ein Medium (2), in das das Makromolekül (1) eingebettet ist oder wird,
- Bestimmen einer Mehrzahl von räumlichen Positionen der mindestens einen fluoreszenten Sonde (4) gegenüber dem Makromolekül (1) durch Lokalisation der mindestens einen vereinzelten fluoreszenten Sonde (4) mit einer einfachen Standardabweichung von nicht mehr als 2 nm, wobei von der vereinzelten fluoreszenten Sonde (4) emittierte Fluoreszenzlichtphotonen registriert werden,
- Bestimmen einer die bestimmten räumlichen Positionen (27) gegenüber dem Makromolekül (1) abgrenzenden Grenzfläche und
- Erstellen einer dreidimensionalen Karte (30) zumindest eines Teils der Oberfläche (3) des Makromoleküls (1) aus der Grenzfläche.

2. Verfahren nach Anspruch 1, **dadurch gekennzeichnet, dass** so viele räumliche Positionen der mindestens einen fluoreszenten Sonde (4) bestimmt werden, dass eine mittlere Flächendichte der an der Oberfläche (3) des Makromoleküls (1) bestimmten räumlichen Positionen (27) mindestens 25 oder mindestens 50 oder mindestens 100 oder mindestens 200 Positionen je 100 Quadratnanometer beträgt.

3. Verfahren nach Anspruch 1 oder 2, **dadurch gekennzeichnet, dass** eine lokale Flächendichte der bestimmten räumlichen Positionen (27) längs der Grenzfläche erfasst und in die dreidimensionale Karte (30) eingetragen wird.

4. Verfahren nach einem der vorhergehenden Ansprüche, **dadurch gekennzeichnet, dass** beim Erstellen der dreidimensionalen Karte (30) Eigenschaften der mindestens einen fluoreszenten Sonde (4) berücksichtigt werden, die aus einer Gruppe ausgewählt sind, welche Abmessungen der mindestens einen fluoreszenten Sonde (4) und physikalische und/oder chemische Affinitäten der mindestens einen fluoreszenten Sonde (4) zu speziellen Bereichen der Oberfläche (3) umfasst.

5. Verfahren nach Anspruch 4, **dadurch gekennzeichnet, dass** aus den bestimmten räumlichen Positionen (27) und den Eigenschaften der mindestens einen fluoreszenten Sonde (4) Bindungsaffinitäten und/oder Bindungskonstanten für Moleküle mit vorgegebenen physikalischen und/oder chemischen Affinitäten abgeleitet und in die dreidimensionale Karte (30) eingetragen werden.

6. Verfahren nach einem der vorhergehenden Ansprüche, **dadurch gekennzeichnet, dass** die mindestens eine fluoreszente Sonde (4) mit einer Affinitätsgruppe (11) versehen wird, die so ausgewählt wird, dass sie eine erhöhte oder ausschließliche Affinität zu speziellen Bereichen (6, 8) der Oberfläche (3) des Makromoleküls (1) mit speziellen chemischen und/oder physikalischen Eigenschaften aufweist.

7. Verfahren nach einem der vorhergehenden Ansprüche, **dadurch gekennzeichnet, dass** eine Raumlage des Makromoleküls (1)
- durch Koppeln des Makromoleküls (1) in fester Orientierung an einen festen Ankoppelplatz (12) in dem Medium (2) vorgegeben wird und/oder
- mit dem Medium (2), in das es eingebettet ist oder wird, fixiert wird und/oder
- durch Bestimmen mindestens einer räumlichen Markerposition mindestens eines an dem Makromolekül (1) angebrachten Positionsmarkers (20) bestimmt wird.

8. Verfahren nach einem der vorhergehenden Ansprüche, **dadurch gekennzeichnet, dass** das Bestimmen der Mehrzahl der räumlichen Positionen der mindestens einen vereinzelten fluoreszenten Sonde (4) gegenüber dem Makromolekül (1) durch Lokalisation mittels MinFlux oder MinSTED durchgeführt wird.

9. Verfahren nach einem der vorhergehenden Ansprüche, **dadurch gekennzeichnet, dass** die mindestens eine fluoreszente Sonde (4) durch Einstellen einer niedrigen räumlichen Konzentration der mindestens einen fluoreszenten Sonde (4) in dem Medium (2) vereinzelt wird.

10. Verfahren nach einem der vorhergehenden Ansprüche, **dadurch gekennzeichnet,**
- **dass** die räumlichen Positionen von der mindestens einen fluoreszenten Sonde (4) durch Relativbewegungen gegenüber dem Makromolekül (1) in dem Medium (2) erreicht werden,
- wobei optional
- eine Diffusionsgeschwindigkeit der mindestens einen fluoreszenten Sonde (4) in dem Medium (2) durch eine Zusammensetzung und/oder eine Temperatur des Mediums (2) und/oder Abmessungen und/oder chemische und/oder physikalische Eigenschaften der fluoreszenten Sonde (4) eingestellt wird und/oder
- die Relativbewegungen durch
- eine externe Anregung des Mediums (2) zu Schwingungen und/oder
- durch eine Strömung des Mediums (2) und/oder
- durch Bewegen des Makromoleküls (1) gegenüber dem Medium (2) und/oder
- durch ein elektrisches oder magnetisches Feld
hervorgerufen wird.

11. Verfahren nach einem der vorhergehenden Ansprüche, **dadurch gekennzeichnet, dass** die räumlichen Positionen der mindestens einen fluoreszenten Sonde (4) unter Vereinzeln wechselnder Teilmengen einer in dem Medium (2) enthaltenen Gesamtanzahl von gleichen fluoreszenten Sonden (4) erreicht werden,
wobei optional das Vereinzeln erfolgt
- unter Ein- und/oder Ausschalten schaltbarer fluoreszenter Sonden (4) und/oder
- unter Aktivieren photoaktivierbarer fluoreszenter Sonden (4) und/oder
- unter Verwendung fluorogener fluoreszenter Sonden (4‴).

12. Verfahren nach einem der vorhergehenden Ansprüche, **dadurch gekennzeichnet, dass** verschiedene fluoreszente Sonden (4', 4") mit unterschiedlichen Affinitäten zu unterschiedlichen Bereichen der Oberfläche (3) des Makromoleküls (1) in das Medium (2) eingebracht werden, wobei das Bestimmen der Mehrzahl der räumlichen Positionen und, optional, das Bestimmen der die räumlichen Positionen abgrenzenden Grenzfläche für die verschiedenen fluoreszenten Sonden (4', 4") getrennt erfolgt.

13. Verfahren nach einem der vorhergehenden Ansprüche, **dadurch gekennzeichnet,**
- **dass** mehrere Kopien des Makromoleküls (1) jeweils mit mindestens einer fluoreszenten Sonde (4) in das Medium (2) eingebettet werden,
- **dass** gegenüber den mehreren Kopien des Makromoleküls (1) jeweils eine Mehrzahl von räumlichen Positionen der jeweiligen mindestens einen vereinzelten fluoreszenten Sonde (4) bestimmt wird und
- **dass** die Grenzfläche so bestimmt wird, dass sie die bestimmten räumlichen Positionen (27) aller vereinzelten fluoreszenten Sonden (4) gegenüber allen Kopien des Makromoleküls (1) abgrenzt.

14. Verfahren nach einem der vorhergehenden Ansprüche, **dadurch gekennzeichnet, dass** beim Erstellen der dreidimensionalen Karte (30) zumindest eines Teils der Oberfläche (3) des Makromoleküls (1) aus der Grenzfläche bereits vorhandene Strukturinformationen zu dem Makromolekül (1) berücksichtigt werden.

15. Verfahren nach einem der vorhergehenden Ansprüche, **dadurch gekennzeichnet, dass** das Bestimmen der räumlichen Positionen der mindestens einen fluoreszenten Sonde (4) gegenüber dem Makromolekül (1) und das Bestimmen der die räumlichen Positionen gegenüber dem Makromolekül (1) abgrenzenden Grenzfläche wiederholt werden, nachdem
- durch Änderung physikalischer und/oder chemischer Umgebungsbedingungen eine Strukturveränderung bei dem Makromolekül (1) hervorgerufen wurde und/oder
- ein weiteres Makromolekül (1) an das Makromolekül (1) angelagert wurde und/oder
- ein das Makromolekül (1) umfassender Molekülkomplex zumindest teilweise aufgelöst wurde.

## Claims

1. Method for mapping the surface (3) of a macromolecule (1) comprising the steps of:
- introducing (23) at least one fluorescent probe (4) into a medium (2) in which the macromolecule (2) is or will be embedded,
- determining a plurality of spatial positions of the at least one fluorescent probe (4) with regard to the macromolecule (1) by localization of the at least one singularized fluorescent probe (4) at a single standard deviation of not more than 2 nm, wherein fluorescence light photons emitted by the singularized fluorescent probe (4) are registered,
- determining a bounding surface bounding the determined spatial positions (27) with regard to the macromolecule (1), and
- generating a three-dimensional map (30) of at least a part of the surface (3) of the macromolecule (1) from the bounding surface.

2. Method of claim 1, **characterized in that** so many spatial positions of the at least one fluorescent probe (4) are determined that an average surface density of the spatial positions (27) determined at the surface (3) of the macromolecule (1) is at least 25 or at least 50 or at least 100 or at least 200 positions per 100 square nanometers.

3. Method of claim 1 or 2, **characterized in that** a local surface density of the determined spatial positions (17) is registered along the bounding surface and entered into the three-dimensional map (30).

4. Method of any of the preceding claims, **characterized in that**, in generating the three-dimensional map (30), properties of the at least one fluorescent probe (4) are considered, which are selected from a group including dimensions of the at least one fluorescent probe (4) and physical or chemical affinities of the at least of one fluorescent probe (4) to special areas of the surface (3).

5. Method of claim 4, **characterized in that** binding affinities and/or binding constants for molecules with predetermined physical and/or chemical affinities are derived from the determined spatial positions (27) and the properties of the at least one fluorescent probe (4), and entered into the three-dimensional map (30).

6. Method of any of the preceding claims, **characterized in that** the at least one fluorescent probe (4) is provided with an affinity group (11) which is selected such that it has an increased or inclusive affinity for special areas (6, 8) of the surface (3) of the macromolecule (1) with special chemical and/or physical properties.

7. Method of any of the preceding claims, **characterized in that** a spatial arrangement of the macromolecule (1)
- is predetermined by coupling the macromolecule (1) in a fixed orientation to a fixed coupling site (12) in the medium (2), and/or
- is fixed by means of the medium (2) in which it is embedded, and/or
- is determined by determining at least one spatial marker position of at least one position marker (20) attached to the macromolecule (1).

8. Method of any of the preceding claims, **characterized in that** the step of determining the plurality of the spatial positions of the at least one singularized fluorescent probe (4) with regard to the macromolecule (1) is implemented by localization by means of MinFlux or MinSTED.

9. Method of any of the preceding claims, **characterized in that** the at least one fluorescent probe (4) is singularized by adjusting a low spatial concentration of the at least one fluorescent probe (4) in the medium (2).

10. Method of any of the preceding claims, **characterized in**
- **that** the spatial positions of the at least one fluorescent probe (4) are reached within the medium (2) by relative movements with regard to the macromolecule (1),
- wherein, optionally,
- a diffusion velocity of the at least one fluorescent probe (4) within the medium (2) is adjusted by a composition and/or a temperature of the medium (2) and/or dimensions and/or chemical and/or physical properties of the fluorescent probe (4), and/or
- the relative movements are elicited by:
- an external excitation of the medium (2) for vibrations and/or
- a flow of the medium (2) and/or
- movements of the macromolecule (1) with regard to the medium (2) and/or
- an electric or magnetic field.

11. Method of any of the preceding claims, **characterized in that** the spatial positions of the at least one fluorescent probe (4) are achieved by means of singularizing alternating subsets of a total number of equal fluorescent probes (4) included in the medium (2), wherein, optionally, the step of singularizing is implemented
- with switching on and/or off switchable fluorescent probes (4), and/or
- with activating photoactivatable fluorescent probes (4), and/or
- with using fluorogenic fluorescent probes (4"').

12. Method of any of the preceding claims, **characterized in that** different fluorescent probes (4', 4") with different affinities to different areas of the surface (3) of the macromolecule (1) are introduced in the medium (2), wherein the step of determining the plurality of the spatial positions and, optionally, the step of determining the bounding surface bounding the spatial positions is separately implemented for the different fluorescent probes (4', 4").

13. Method of any of the preceding claims, **characterized in**
- **that** several copies of the macromolecule (1), each together with at least one fluorescent probe (4), are embedded in the medium (2),
- **that** a plurality of spatial positions of the respective at least one singularized fluorescent probe (4) are determined with regard to each of the several copies of the macromolecule (1), and
- **that** the bounding surface is determined such that it bounds the determined spatial positions (27) of all singularized fluorescent probes (4) with regard to all copies of the macromolecule (1).

14. Method of any of the preceding claims, **characterized in that**, in the step of generating the three-dimensional map (30) of at least a part of the surface (3) of the macromolecule (1) from the bounding surface, already present structural information on the macromolecule (1) is considered.

15. Method of any of the preceding claims, **characterized in that** the step of determining the spatial positions of the at least one fluorescent probe (4) with regard to the macromolecule (1) and the step of determining the bounding surface bounding the spatial positions with regard to the macromolecule (1) are repeated after
- a structural change in the macromolecule (1) has been caused by a change of physical or chemical surrounding conditions, and/or
- a further macromolecule (1) has been attached to the macromolecule (1), and/or
- a molecule complex including the macromolecule (1) has at least partially been dissolved.

## Revendications

1. Procédé pour dresser une carte d'une surface (3) de macromolécule (1), comprenant les étapes consistant à introduire (23) au moins une sonde fluorescente (4) dans un milieu (2) dans lequel la macromolécule (1) est ou sera incorporée,
à déterminer une pluralité de positions spatiales de l'au moins une sonde fluorescente (4) par rapport à la macromolécule (1) par le biais de la localisation de l'au moins une sonde fluorescente isolée (4) avec un écart type simple ne dépassant pas 2 nm, les photons de lumière fluorescente émis par la sonde fluorescente isolée (4) étant enregistrés,
à déterminer une interface délimitant les positions spatiales déterminées (27) par rapport à la macromolécule (1) et
à établir une carte tridimensionnelle (30) d'au moins une partie de la surface (3) de la macromolécule (1) à partir de l'interface.

2. Procédé selon la revendication 1, **caractérisé en ce que** sont déterminées autant de positions spatiales de l'au moins une sonde fluorescente (4) qu'une densité moyenne des positions spatiales déterminées (27) à la surface (3) de la macromolécule (1) s'élève à au moins 25 ou au moins 50 ou au moins 100 ou au moins 200 positions pour 100 nanomètres carrés.

3. Procédé selon la revendication 1 ou 2, **caractérisé en ce qu'**une densité de surface locale des positions spatiales déterminées (27) est enregistrée le long de l'interface et inscrite dans la carte tridimensionnelle (30).

4. Procédé selon l'une des revendications précédentes, **caractérisé en ce que,** lors de la création de la carte tridimensionnelle (30), les propriétés de l'au moins une sonde fluorescente (4) sont prises en compte, lesquelles sont sélectionnées à partir d'un groupe comprenant les dimensions de l'au moins une sonde fluorescente (4) et les affinités physiques et/ou chimiques de l'au moins une sonde fluorescente (4) avec des zones spécifiques de la surface (3).

5. Procédé selon la revendication 4, **caractérisé en ce que**, à partir des positions spatiales déterminées (27) et des propriétés de l'au moins une sonde fluorescente (4), des affinités de liaison et/ou des constantes de liaison pour des molécules ayant des affinités physiques et/ou chimiques prédéfinies sont dérivées et saisies dans la carte tridimensionnelle (30).

6. Procédé selon l'une des revendications précédentes, **caractérisé en ce que** l'au moins une sonde fluorescente (4) est pourvue d'un groupe d'affinité (11) qui est choisi de manière à présenter une affinité accrue ou exclusive pour des zones spécifiques (6, 8) de la surface (3) de la macromolécule (1) ayant des propriétés chimiques et/ou physiques spécifiques.

7. Procédé selon l'une des revendications précédentes, **caractérisé en ce qu'**une position spatiale de la macromolécule (1)
est prédéfinie en couplant la macromolécule (1) dans une orientation fixe à un emplacement de couplage fixe (12) dans le milieu (2) et/ou
est fixée au milieu (2) dans lequel elle est ou sera incorporée et/ou est déterminée par la détermination d'au moins une position spatiale d'au moins un marqueur de position (20) fixé à la macromolécule (1).

8. Procédé selon l'une des revendications précédentes, **caractérisé en ce que** la détermination de la pluralité de positions spatiales de l'au moins une sonde fluorescente isolée (4) par rapport à la macromolécule (1) est effectuée par le biais de la localisation au moyen de MinFlux ou MinSTED.

9. Procédé selon l'une des revendications précédentes, **caractérisé en ce que** l'au moins une sonde fluorescente (4) est isolée en ajustant une faible concentration spatiale de l'au moins une sonde fluorescente (4) dans le milieu (2).

10. Procédé selon l'une des revendications précédentes, **caractérisé en ce que**
les positions spatiales de l'au moins une sonde fluorescente (4) sont obtenues par mouvements relatifs par rapport à la macromolécule (1) dans le milieu (2),
une vitesse de diffusion de l'au moins une sonde fluorescente (4) dans le milieu (2) étant éventuellement ajustée par une composition et/ou une température du milieu (2) et/ou des dimensions et/ou des propriétés chimiques et/ou physiques de la sonde fluorescente (4) et/ou
les mouvements relatifs étant provoqués par une stimulation externe du milieu (2) pour produire des oscillations et/ou
par un écoulement du milieu (2) et/ou
par le déplacement de la macromolécule (1) par rapport au milieu (2)
et/ou
par un champ électrique ou magnétique.

11. Procédé selon l'une des revendications précédentes, **caractérisé en ce que**
les positions spatiales de l'au moins une sonde fluorescente (4) sont obtenues en séparant des sous-ensembles changeants d'un nombre total de sondes fluorescentes identiques (4) contenues dans le milieu (2),
la séparation pouvant être effectuée
en activant et/ou en désactivant des sondes fluorescentes commutables (4) et/ou
en activant des sondes fluorescentes photoactivables (4) et/ou
en utilisant des sondes fluorescentes fluorogènes (4"').

12. Procédé selon l'une des revendications précédentes, **caractérisé en ce que** différentes sondes fluorescentes (4', 4") ayant des affinités différentes pour différentes zones de la surface (3) de la macromolécule (1) sont introduites dans le milieu (2), la détermination de la pluralité de positions spatiales et, en option, la détermination de l'interface délimitant les positions spatiales pour les différentes sondes fluorescentes (4', 4") étant effectuées séparément.

13. Procédé selon l'une des revendications précédentes, **caractérisé en ce que**
plusieurs copies de la macromolécule (1) sont chacune intégrées dans le milieu (2) avec au moins une sonde fluorescente (4),
**en ce que**, par rapport aux multiples copies de la macromolécule (1), une pluralité de positions spatiales de l'au moins une sonde fluorescente isolée (4) respective est déterminée et
**en ce que** l'interface est déterminée de manière à délimiter les positions spatiales déterminées (27) de toutes les sondes fluorescentes isolées (4) par rapport à toutes les copies de la macromolécule (1).

14. Procédé selon l'une des revendications précédentes, **caractérisé en ce que,** lors de la création de la carte tridimensionnelle (30) d'au moins une partie de la surface (3) de la macromolécule (1) à partir de l'interface, les informations structurelles déjà disponibles sur la macromolécule (1) sont prises en compte.

15. Procédé selon l'une des revendications précédentes, **caractérisé en ce que** la détermination des positions spatiales de l'au moins une sonde fluorescente (4) par rapport à la macromolécule (1) et la détermination de l'interface délimitant les positions spatiales par rapport à la macromolécule (1) sont répétées après
qu'une modification des conditions physiques et/ou chimiques de l'environnement a provoqué une modification de la structure de la macromolécule (1) et/ou
qu'une autre macromolécule (1) se soit fixée à la macromolécule (1) et/ou
un complexe moléculaire comprenant la macromolécule (1) a été au moins partiellement dissous.
